# EUROPEAN PATENT APPLICATION

(11) **EP 2 194 333 A2**
(43) Date of publication of application: **09.06.2010**
(21) Application number: 09177721.9
(22) Date of filing: 02.12.2009
(51) Int. Cl.: F24J 2/04

(54) **Improved solar collector**

(30) Priority: 04.12.2008 IT TO20080164 U
(71) Applicant: Gallo Franco, 10060 Airasca (TO) (IT)
(72) Inventor: Gallo Franco, 10060 Airasca (TO) (IT)
(74) Representative: Camolese, Marco

(57) **Abstract**

The present invention relates to a solar collector of the type comprising:
- a plurality of tubular elements (10) adapted to absorb solar radiation in order to heat a fluid contained therein, said tubular elements (10) having a first end (11) and a second end (12);
- a casing (20) adapted to house said plurality of tubular elements (10) and having an open side (20A) allowing said solar radiation to enter;
- a transparent surface (30) that closes the open side (20A) of said casing, so as to prevent the tubular elements (10) from getting into direct contact with the surrounding environment;
- a first pipe (21) carrying the fluid into the solar collector (1) and a second pipe (22) carrying the fluid out of said solar collector (1).

The invention is **characterized in that** the solar collector (1) comprises a plurality of covers (40) substantially having a plate-like shape, each cover (40) being adapted to close said first end (11) and second end (12) of the tubular element (10) and to connect two or more tubular elements (10) to one another, thus making the solar collector (1) modular.

## Description

The present invention relates to a solar collector according to the preamble of claim 1.

A technology for the thermal utilization of solar energy is known in the art which provides for directly converting solar energy into thermal energy, i.e. heat. As a matter of fact, solar energy is the cleanest and most abundant source of energy available on earth, one application thereof consisting of thermal solar collectors capable of heating a fluid, in particular hot sanitary and heating water.

As a consequence, a plurality of types of solar collectors have been conceived so far, the most widespread one being a solar collector which includes:
- a plurality of tubular elements adapted to absorb solar radiation in order to heat a fluid, said tubular elements having a first end and a second end;
- a casing adapted to house said plurality of tubular elements and having an open side allowing said solar radiation to enter;
- a transparent surface, in particular a glass pane, that closes the open side of said casing, so as to prevent the tubular elements from getting into direct contact with the surrounding environment;
- a first pipe carrying the fluid into the solar collector and a second pipe carrying the fluid out of said solar collector.

Preferably, the casing that accommodates the plurality of tubular elements must be well insulated thermally, so that it will not waste the heat absorbed by the tubular elements and, consequently, by the fluid circulating within said tubular elements.

The solar collectors known in the art typically comprise:
- a distribution element, for connecting a first end of said plurality of tubular elements to the fluid inlet pipe;
- a collection element, for connecting a second end of said plurality of tubular elements to the fluid outlet pipe,
said distribution and collection elements being arranged in a position which is substantially perpendicular to the first and second ends of said plurality of tubular elements or, more in general, to the position of said plurality of tubular elements. An example of a solar collector as described above is the one disclosed in document GB1576717.

However, such a type of solar collector suffers from several drawbacks.

In particular, assembling the distribution and collection elements together with the tubular elements is rather difficult, mostly because special measures must be taken at the junction points between the tubular elements and the distribution and/or collection elements.

Moreover, said junction points are often subject to leaks of the fluid to be heated; it inevitably follows that, in addition to being difficult to assemble, the solar collectors known in the art are also quite inefficient, since the heat absorbed by the tubular elements is largely wasted due to said leaks of fluid circulating therein.

Another drawback of the known solar collectors is that they cannot be easily adapted to the surface where they are to be installed, in particular from a dimensional viewpoint. In fact, the solar collectors known in the art are usually made in fixed standard sizes and they can hardly be so designed as to allow the increase or decrease of their dimensions, i.e. be made bigger or smaller in order to fit the available surface in which they will be installed.

In this frame, it is the main object of the present invention to overcome the above-mentioned drawbacks by providing a solar collector conceived in a manner such that the assembly of the components thereof is simplified.

Another object of the present invention is to provide a solar collector so designed as to prevent any undesired leakage of the fluid circulating therein, hence optimizing the utilization of the heat absorbed by the components of the solar collector.

It is a further object of the present invention to provide a solar collector which can be easily adapted , in particular from a dimensional point of view, to the area in which it will be installed. In order to achieve these objects, the present invention provides a solar collector incorporating the features set out in the appended claims, which are intended as an integral part of the present description.

Further objects, features and advantages of the present invention will become apparent from the following detailed description and from the annexed drawings, which are supplied by way of non-limiting example, wherein:
- Fig. 1 is an exploded perspective view of a solar collector according to the present invention;
- Fig. 2 is an exploded plan view of the solar collector according to the present invention;
- Figs. 3a and 3b respectively show a perspective view and a side view of a first component and a second component of the solar collector according to the present invention;
- Fig. 4 is a perspective view of a second component of the solar collector according to the present invention.

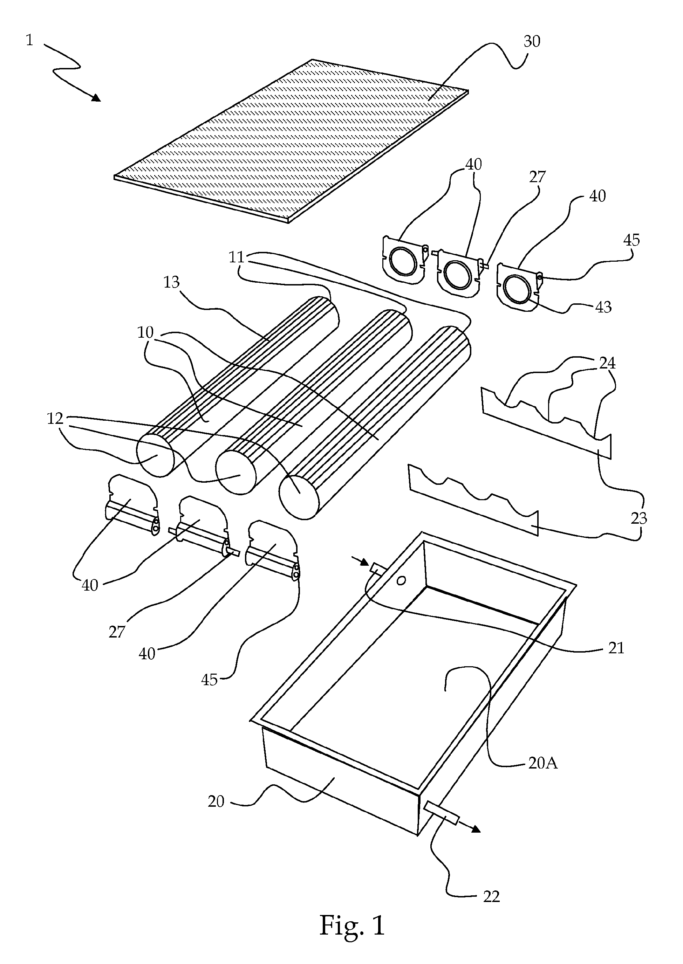

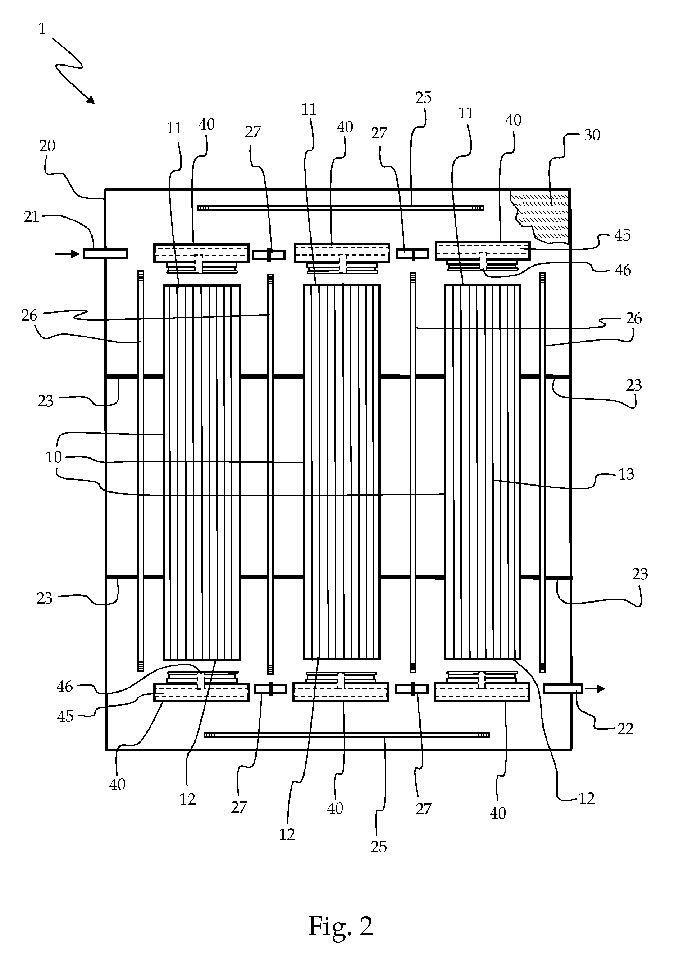

Referring now to Figs. 1 and 2, reference numeral 1 designates as a whole a solar collector according to the present invention.

Solar collector 1 comprises:
- a plurality of tubular elements 10 adapted to absorb solar radiation in order to heat a fluid contained therein, said tubular elements 10 having a first end 11 and a second end 12;
- a casing 20 adapted to house said plurality of tubular elements 10 and having an open side 20A allowing said solar radiation to get through;
- a transparent surface 30 that closes open side 20A of said casing, so as to prevent tubular elements 10 from getting into direct contact with the surrounding environment;
- a first pipe 21 carrying the fluid into solar collector 1 and a second pipe 22 carrying the fluid out of said solar collector 1.

Casing 20 preferably comprises insulating means (not shown in the drawings) which allow tubular elements 10 to be kept thermally insulated, so that the heat absorbed by said tubular elements 10 and by the fluid contained therein is not wasted.

Advantageously, transparent surface 30 may be made of glass; also, it may be so manufactured as to attain a refraction of the solar radiation onto said plurality of tubular elements 10, thereby enhancing solar irradiation.

Furthermore, solar collector 1 according to the present invention comprises at least one support element 23 having at least one notch 24 adapted to receive the outer surface of said tubular elements 10 and to ensure that the latter rest securely inside casing 20.

In accordance with the present invention, the solar collector 1 comprises a plurality of covers 40 substantially having a plate-like shape, each cover 40 being adapted to close said first end 11 and second end 12 of tubular element 10 and to connect two or more tubular elements 10 to one another, thus making solar collector 1 modular.

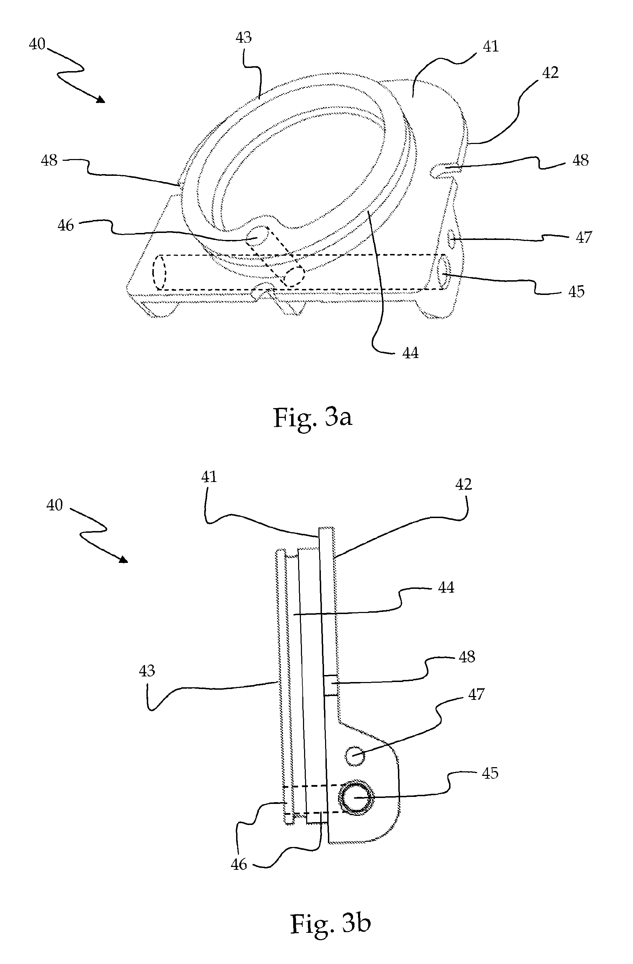

Figs. 3a and 3b respectively show a perspective view and a side view of cover 40 according to the present invention. In particular, it can be seen in these drawings that cover 40 has a first surface 41 and a second surface 42, said first surface 41 having a relief 43 adapted to be inserted into first end 11 and second end 12 of tubular element 10, the shape of said relief 43 being complementary to that of said first end 11 and second end 12.

In a preferred embodiment of the present invention, a seat 44 can be obtained on an outer surface of relief 43 for mounting a gasket preventing any fluid leakage from tubular element 10 and for ensuring that said first end 11 and second end 12 are properly sealed.

In accordance with the present invention, cover 40 comprises:
- a first duct 45 allowing the fluid to be heated to enter said cover 40, and
- a second duct 46 for delivering said fluid into tubular element 10 and for collecting the fluid flowing out of each tubular element 10.

In particular, said first duct 45 is substantially obtained on second surface 42 of cover 40, whereas second duct 46 is obtained in said relief 43.

In Figs. 2, 3a and 3b, said first duct 45 and second duct 46 are mostly drawn by means of dashed lines.

Preferably, solar collector 1 according to the present invention comprises a plurality of fittings 27 (clearly shown in Fig. 2) which allow multiple covers 40 to be hydraulically connected to one another.

As shown in particular in Fig. 2, the fluid to be heated is supplied to solar collector 1 according to the present invention as follows:
- first pipe 21 delivers said fluid into first duct 45 of a cover 40;
- a portion of the fluid enters tubular element 10 through second duct 46 of cover 40 and is heated by the solar radiation hitting the surface of said tubular element 10;
- the remaining portion of fluid reaches, preferably through fittings 27, covers 40 arranged at first end 11 of each tubular element 10 and is then delivered into tubular elements 10 through second ducts 46 of said covers 40.

The fluid contained in solar collector 1 will then flow out as follows:
- the fluid, heated by the solar radiation hitting the surface of tubular elements 10, flows out of each tubular element 10 through second ducts 46 of each cover 40 arranged at second end 12 of said tubular elements 10;
- the fluid flows through first ducts 45 of each cover 40 and into fittings 27 until it reaches second pipe 22, through which it flows out of solar collector 1.

It is apparent that the special conformation of covers 40 facilitates the assembly of tubular elements 10 of solar collector 1, while preventing any undesired leakage of the fluid circulating therein.

Furthermore, said covers 40 allows a variable number of said tubular elements 10 to be joined together, ultimately and advantageously conferring modularity to solar collector 1.

Referring back to Figs. 2, 3a and 3b, it can be seen that cover 40 comprises at least one hole 47 and one slot 48 for inserting suitable connection means. In particular, said connection means comprise:
- at least one first tie rod 25, which allows to join together a plurality of covers 40 associated with first end 11 or second end 12 of tubular elements 10;
- at least one second tie rod 26, which allows to join one cover 40 associated with first end 11 together with one cover 40 associated with the second end 12 of each tubular element 10.

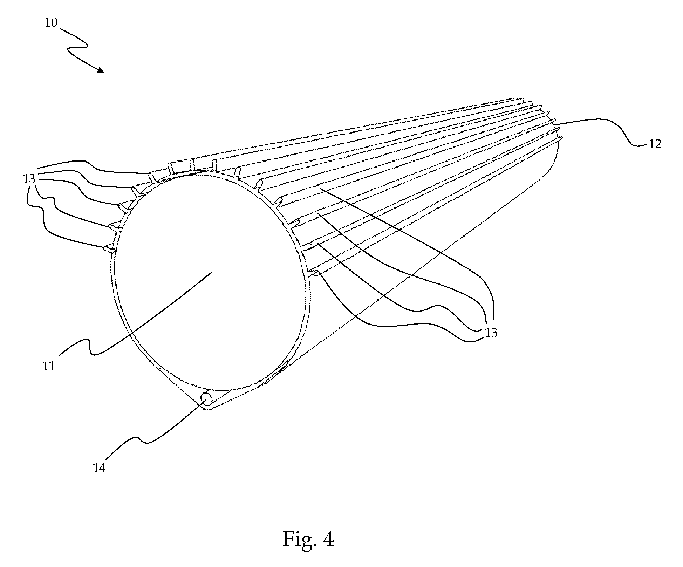

Fig. 4 is a detailed perspective view of a tubular element 10 of solar collector 1 according to the present invention.

This drawing clearly shows that at least a portion of the outer surface of tubular element 10 comprises a plurality of fins 13 which enhance the thermal exchange between tubular element 10 and the solar radiation.

Tubular element 10 may also comprise a channel 14 adapted to accommodate heating means (not shown) which, when activated by the user, will prevent the temperature of the fluid inside tubular element 10 from getting too low, in particular during the coldest periods of the year.

The advantages of a solar collector according to the present invention are apparent from the above description.

In particular, it can be easily understood that solar collector 1 according to the present invention is designed in a manner such that the components thereof can be assembled easily, particularly because of the advantageous conformation of covers 40.

Moreover, said covers 40 allow to prevent any undesired leakage of the fluid circulating within solar collector 1, in particular thanks to the provision of a gasket in seat 44 obtained on relief 43 of each cover 40; this clearly allows to optimize the utilization of the heat absorbed by tubular elements 10 of solar collector 1.

A further advantage of solar collector 1 according to the present invention is given by the fact that the presence and special conformation of covers 40 allows to provide a solar collector 1 which can be easily adapted to the installation area, in particular from a dimensional viewpoint. In fact, covers 40 allow a variable number of tubular elements 10 to be joined together, thus advantageously conferring modularity to solar collector 1.

The solar collector described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described solar collector, but may be subject to many modifications, improvements or replacements of equivalent parts and elements without departing from the inventive idea, as clearly specified in the following claims.

## Claims

1. Solar collector (1) of the type comprising:
- a plurality of tubular elements (10) adapted to absorb solar radiation in order to heat a fluid contained therein, said tubular elements (10) having a first end (11) and a second end (12);
- a casing (20) adapted to house said plurality of tubular elements (10) and having an open side (20A) allowing said solar radiation to get through;
- a transparent surface (30) that closes the open side (20A) of said casing, so as to prevent the tubular elements (10) from getting into direct contact with the surrounding environment;
- a first pipe (21) carrying the fluid into the solar collector (1) and a second pipe (22) carrying the fluid out of said solar collector (1),
**characterized in that**
said solar collector (1) comprises a plurality of covers (40) substantially having a plate-like shape, each cover (40) being adapted to close said first end (11) and second end (12) of the tubular element (10) and to connect two or more tubular elements (10) to one another, thus making the solar collector (1) modular.

2. Solar collector (1) according to claim 1, **characterized in that** said cover (40) has a first surface (41) and a second surface (42), said first surface (41) having a relief (43) adapted to be inserted into the first end (11) and second end (12) of the tubular element (10), the shape of said relief (43) being complementary to that of said first end (11) and second end (12).

3. Solar collector (1) according to claim 2, **characterized by** comprising a seat (44) obtained on an outer surface of the relief (43) for mounting a gasket which prevents any fluid leakage from the tubular element (10) and which ensures that said first end (11) and second end (12) are properly sealed.

4. Solar collector (1) according to claim 1, **characterized in that** said cover (40) comprises:
- a first duct (45) allowing the fluid to be heated to enter said cover (40), and
- a second duct (46) for delivering said fluid into the tubular element (10) and for collecting the fluid flowing out of each tubular element (10).

5. Solar collector (1) according to claim 4, **characterized in that** said first duct (45) is substantially obtained on the second surface (42) of the cover (40).

6. Solar collector (1) according to claims 2 and 4, **characterized in that** said second duct (46) is obtained in said relief (43).

7. Solar collector (1) according to claim 1, **characterized by** comprising a plurality of fittings (27) which allow multiple covers (40) to be hydraulically connected to one another.

8. Solar collector (1) according to claim 1, **characterized in that** each cover (40) comprises at least one hole (47) and one slot (48) for inserting suitable connection means (25, 26).

9. Solar collector (1) according to claim 8, **characterized in that** said connection means comprise at least one first tie rod (25) which allows a plurality of covers (40) associated with the first end (11) or second end (12) of the tubular elements (10) to be joined together.

10. Solar collector (1) according to claim 8 or 9, **characterized in that** said connection means comprise at least one second tie rod (26) which allows one cover (40) associated with the first end (11) and one cover (40) associated with the second end (12) of each tubular element (10) to be joined together.

11. Solar collector (1) according to claim 1, **characterized in that** at least a portion of the outer surface of the tubular element (10) comprises a plurality of fins (13) which enhance the thermal exchange between the tubular element (10) and the solar radiation.

12. Solar collector (1) according to claim 1, **characterized in that** said tubular element (10) comprises a channel (14) adapted to accommodate heating means which prevent the temperature of the fluid inside the tubular element (10) from getting too low, in particular during the coldest periods of the year.

13. Solar collector (1) according to claim 1, **characterized in that** said casing (20) comprises insulating means which allow the tubular elements (10) to be kept thermally insulated, so that the heat absorbed by said tubular elements (10) and by the fluid contained therein is not wasted.

14. Solar collector (1) according to claim 1, **characterized in that** said transparent surface (30) may be made of glass and/or may be so manufactured as to attain a refraction of the solar radiation onto said plurality of tubular elements (10), thereby enhancing solar irradiation.

15. Solar collector (1) according to claim 1, **characterized by** comprising at least one support element (23) having at least one notch (24) adapted to receive the outer surface of said tubular elements (10) and to ensure that the latter rest securely inside the casing (20).
